# EUROPEAN PATENT SPECIFICATION

(11) **EP 2 959 645 B1**
(45) Date of publication and mention of the grant of the patent: **24.06.2020**
(21) Application number: 14764788.7
(22) Date of filing: 13.03.2014
(51) Int. Cl.: H04L 12/70, H04L 29/06, H04L 12/801, H04L 12/807

(54) **DYNAMIC OPTIMIZATION OF TCP CONNECTIONS**
DYNAMISCHE OPTIMIERUNG VON TCP-VERBINDUNGEN
OPTIMISATION DYNAMIQUE DE CONNEXIONS TCP

(30) Priority: 13.03.2013 US 201313802329
(43) Date of publication of application: 30.12.2015
(73) Proprietor: Huawei Technologies Co., Ltd., Longgang District Shenzhen, Guangdong 518129 (CN)
(72) Inventor: WACLAWSKY, John, Barlett, Illinois 60103 (US); HE, Xianjun, Shenzhen Guangdong 518129 (CN); MENG, Zechao, Shenzhen Guangdong 518129 (CN)
(74) Representative: Goddar, Heinz J.
(86) International application number: PCT/CN2014/073343
(87) International publication number: WO 2014/139445

(56) References cited:
- WO-A2-2006/045345
- US-A1- 2002 097 722
- US-A1- 2004 015 591
- US-A1- 2006 146 729
- US-A1- 2006 221 987
- US-A1- 2009 109 849
- US-A1- 2012 106 342
- US-A1- 2012 213 069

## Description

### FIELD OF INVENTION

The present invention relates generally to communications, and in specific embodiments, to dynamic optimization of communication protocol parameters.

### BACKGROUND

The Transmission Control Protocol (TCP) is a core protocol corresponding to the transport layer of Internet Protocol (IP) suite, which serves as an intermediate layer between the application layer (e.g., the program) and the internet protocol (IP) layer. TCP provides reliable and ordered delivery of data from one program on one computer to another program on another computer, and is used by major Internet applications, e.g., browsing, email, file transfer, etc.

Modern day TCP algorithms are typically designed to address specific issues (e.g., congestion control, throughput, latency, fairness, quality of service (QoS), wireless compatibility, etc.), and consequently may perform better under some network conditions than others. For instance, a faster error recovery (FACK) TCP algorithm designed to effectively control congestion in wire-line networks may not perform well in wireless networks due to being unable to distinguish between congestion related packet loss (e.g., packets dropped from a buffer, etc.) and non-congestion related packet loss (e.g., packet not received correctly due to interference, packet corruption , etc.). Similarly, a detection of out-of-order (DOOR) TCP algorithm designed for efficiently handling re-ordered packets may be unable to efficiently maintain network objectives related to traffic priority, fairness, and/or Quality of Service.

Conventional networks implement a single/static TCP algorithm on a given piece of network equipment (e.g., a router, switch, server, etc.) such that all TCP connections constructed or operated by that piece of network equipment comply with a common set TCP parameters (as defined by the TCP algorithm configured on the device). As a result, conventional TCP networks may be incapable of adapting to constantly changing usage demands which may cause, *inter alia,* packet flows to cross different networking environments at different times.
US 2009/109849 A1 discloses a method for selective performance enhancement of traffic flows, such as a Transmission Control Protocol (TCP) flow, on devices where enhancement of a limited number of concurrent flows is supported, or where a limited number of TCP accelerated or IP (Internet Protocol) compressed flows are supported. Flows are selected to be enhanced, accelerated or compressed based on configured priorities, including but not limited to type of the flow, importance of the flow, and availability of resources to enhance, accelerate or compress the flow. For example, a high-priority TCP session is accelerated for the lifetime of the session, while a low-priority TCP session is accelerated while there are available resources for the low-priority flow. WO 2006/045345 A2 discloses an apparatus for switching between different implementations of a transport protocol, said apparatus comprising: a plurality of different implementations of a transport protocol; an upper transport layer interface for connecting said plurality of different transport protocol implementations with the layer above the transport layer; a lower transport interface for connecting said plurality of a transport protocol implementations with the layer below that transport layer, whereas said upper transport interface and said lower transport interface respectively are capable of switching their connection between the different transport protocol implementation based on switching information, and a control module for determining the switching information for switching the connection between the upper interface and the plurality of transport protocol implementations and the lower transport interface and the plurality of transport protocol implementations such that for a certain communication session the transport protocol implementation which yields an optimised data flow is selected.
US 2012/106342 A1 discloses systems and methods for prioritizing transmission control protocol (TCP) flows for communication devices in a network. The systems and methods herein may further allocate bandwidth to the flows based on the priority of the flows. Further, the systems and methods herein allow devices to determine whether particular flows share a traffic flow constraint or bottleneck that limits the overall available bandwidth to the flows. Therefore, allocation of bandwidth for one flow may be adjusted based on allocation of bandwidth to another flow if the flows share a traffic flow constraint. Further, the systems and methods herein allow for target data rates to be determined for the flows based on shared traffic flow constraints.
US 2012/213069 A1 discloses a transmission control method that includes performing communication between a transmission source communication device and a transmission destination communication device by using a transmission control protocol which includes a plurality of congestion control functions corresponding to a plurality of congestion control methods, respectively, and causing, when the transmission source communication device and the transmission destination communication device switch from a first congestion control function to a second congestion control function, at least one of a plurality of parameters for controlling operating states in the first congestion control function to be inherited by a parameter for controlling an operating state in the second congestion control function.
US 2006/221987 A1 discloses methods, apparatuses, and articles of manufacture for transmitting data received from one or more devices of a local area network to a first gateway device of a first wireless wide area network, and selectively transmitting data received from the first gateway device of the first wireless wide area network to the one or more devices of the local area network, if a first wireless wide area networking interface is removably received by a socket of the gateway, the socket capable of removably receiving a selected one of the first and a second wireless wide area networking interface, and transmitting data received from the one or more devices of the local area network to a second gateway device of a second wireless wide area network, and selectively transmitting data received from the second gateway device of the second wireless wide area network to the one or more devices of the local area network, if the second wireless wide area networking interface is removably received by the socket, are described herein.

### SUMMARY

The present invention provides a method according to claim 1 and an apparatus according to claim 10. Technical advantages are generally achieved, by embodiments of this disclosure which describe dynamic optimization of protocols such as TCP over network connections.

### BRIEF DESCRIPTION OF THE DRAWINGS

For a more complete understanding of the present disclosure, and the advantages thereof, reference is now made to the following descriptions taken in conjunction with the accompanying drawings, in which:
FIG. 1 illustrates a diagram of a conventional network architecture of TCP connections;
FIG. 2 illustrates a diagram of a typical TCP transmission activity sequence;
FIG. 3 illustrates a diagram of an embodiment of a network architecture of TCP connections;
FIG. 4 illustrates a diagram of another embodiment of a network architecture of TCP connections;
FIG. 5 illustrates a diagram of an embodiment middlebox;
FIG. 6 illustrates a flowchart of an embodiment method for communicating data;
FIG. 7 illustrates a flowchart of another embodiment method for communicating data;
FIG. 8 illustrates a diagram of yet another embodiment of a network architecture of TCP connections;
FIG. 9 illustrates a flowchart of yet another embodiment method for communicating data;
FIG. 10 illustrates a diagram of yet another embodiment of a network architecture of TCP connections;
FIG. 11 illustrates a flowchart of yet another embodiment method for communicating data;
FIGS. 12A-12D illustrate diagrams of a network architecture of TCP connections during different phases of a TCP communications sequence;
FIG. 13 illustrates a flowchart of yet another embodiment method for communicating data;
FIG. 14 illustrates a flowchart of yet another embodiment method for communicating data;
FIG. 15 illustrates a block diagram of an embodiment communications device.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION

The making and using of embodiments of this disclosure are discussed in detail below. It should be appreciated, however, that the concepts disclosed herein can be embodied in a wide variety of specific contexts, and that the specific embodiments discussed herein are merely illustrative and do not serve to limit the scope of the claims. Further, it should be understood that various changes, substitutions and alterations can be made herein without departing from the scope of this disclosure as defined by the appended claims. Aspects of this disclosure may be applied to various communication protocols. Notably, while much of this disclosure is discussed in the context of transmission control protocol (TCP), embodiments discussed herein may be applied to any communication protocol. Indeed, aspects of this disclosure may be particularly useful for protocols in which control/manipulation of communication parameters influences network performance.

The fundamental nature of the IP (which TCP is typically enveloped) is connectionless, which allows for dynamic re-routing of packets. Accordingly, TCP connections carried by IP can be moved to different network paths dynamically, which affects TCP connection latency, throughput, and other performance characteristics of the TCP connections

Disclosed herein are various techniques for dynamically optimizing TCP connections to achieve improved network performance. One aspect of this disclosure dynamically configures TCP connection parameters (e.g., parameters associated with; slow start, congestion avoidance, fast-retransmit, fast recovery, etc.) before usage or at start-up, e.g., prior to transporting a traffic flow over the network. More specifically, TCP connection parameters may be selected based on a traffic characteristic, a network characteristic, a history of traffic activity, expected loads, desired throughput and latency or some other characteristic. Once selected, the TCP parameters may be used to configure a new or select and modify an existing TCP connection for transporting the traffic. For instance, a new TCP connection may be constructed using the selected TCP parameters. Alternatively, an existing/persistent TCP connection may be reconfigured using the selected TCP parameters. As yet a further alternative, the selected TCP parameters may be used to select and/or modify a pre-configured persistent TCP connection from a pool of TCP connections.

Another aspect of this disclosure dynamically configures TCP parameters after beginning to transport traffic flows over the network. In such an embodiment, transportation of the traffic over the network may begin immediately using default TCP parameters, and unique or different TCP parameters may be selected only upon the occurrence of a condition (e.g., occurrence of a congestion condition, detection of a specific traffic pattern in packet arrivals or acknowledgements (ACKs), condition coupled with knowledge of past history, etc.). Immediately transporting the traffic may allow for quicker and/or more efficient handling of short flow data objects, such as Hypertext Transfer Protocol (HTTP) objects.

Yet another aspect of this disclosure allows multiple clients to share a set of persistent time-shared TCP connections. In one embodiment, client traffic flows are individually transported over a single time-shared TCP connection one at a time. In such embodiments, individual TCP connections carry no more than one client traffic flow at any given instance in time. In other embodiments, client traffic flows may collectively be transported over a group of TCP connections such that individual TCP connections carry multiple client traffic flows at the same time.

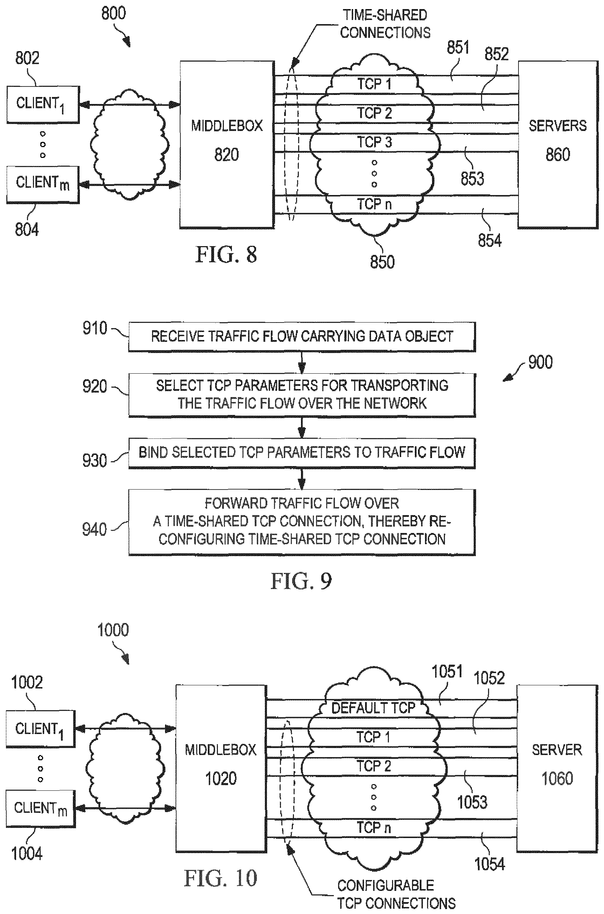

Time-sharing TCP connections may be particularly beneficial when an intermediate switching device (e.g., a middlebox, etc.) is switching traffic from a low speed network (e.g., a WAN) to a high speed network (e.g., a LAN). More specifically, WAN connections tend to have much longer round trip times (RTTs) than LAN TCP connections. As a result, traffic is typically received over WAN connections at a much lower rate than it is transmitted over LAN TCP connections. As an example, FIG. 8 (discussed in greater detail below) depicts a network over which many clients share comparatively fewer persistent TCP connections formed over a highspeed LAN. Conventionally, traffic received over a WAN connection is immediately transmitted over a corresponding LAN TCP connection, which can result in the LAN TCP connection being tied up for long periods, e.g., while the remaining traffic flow is received over the WAN connection. To avoid needlessly tying up LAN resources, aspects of this disclosure buffer traffic flows being received over WAN TCP connections until the traffic flow has been received in its entirety, and thereafter begin transporting the traffic flow over a LAN TCP connection in a single burst. Accumulating the WAN packets before sending them in a burst over the LAN has the added advantage to make sure that an entire request arrives and the user (individual or program entity) really wants the object, for example, a user didn't click off the object request (change the web page which causes a connection reset or end) before asking the server to do processing to retrieve the object from its data store.

Some aspects of this disclosure may be performed by a middlebox, which may be any switching device configured to dynamically transport TCP traffic over a network. In one example, a middlebox is a stand-alone component positioned between a client device and a source device (e.g., a server). In another embodiment, the middlebox is a module or component located on the client or source device. For instance, the middlebox may be implemented on a network interface card (NIC) on a communications device (e.g., computer, router, server, etc.).

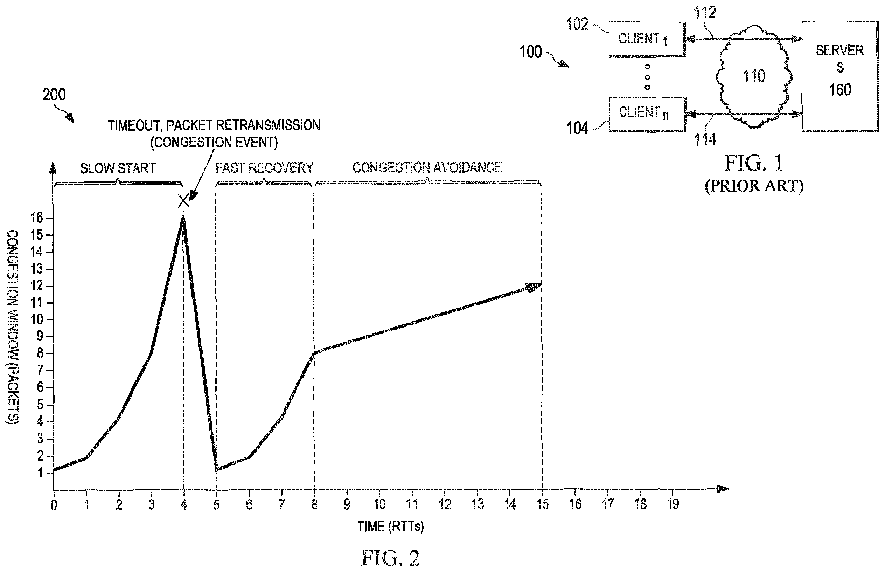

FIG. 1 illustrates a conventional network architecture 100 comprising a plurality of clients 102-104, a network 110, and a server 160. As shown, the client 102 sends/receives data over network 110 via a TCP connection 112, while the client 104 sends/receives data over the network 110 via a TCP connection 114. The TCP connections 112-114 may be constructed and de-constructed each time a TCP session is initiated between the clients 102-104 and the server 160. Further, the TCP connection 112-114 may be operated in accordance with a static set of TCP parameters, as defined by the TCP algorithm configured on the server 160 and on the clients 102-104. As a result, as much as sixty percent (or more) of the servers resources may be used to build, operate, manage and tear-down TCP connections.

TCP algorithms may operate by increasing/decreasing their transmission rate (e.g., window size) to manage or avoid congestion. FIG. 2 illustrates a TCP transmission sequence 200, as may occur between a client and a server. Notably, transmission rates may be expressed in packets per round trip time (RTT), which is the length of time it takes for an acknowledgment to be received following the transmission of a packet. Notably, the TCP transmission sequence 200 is included herein merely as an example of how some TCP parameters affect connection performance, and does not serve to limit the type and/or number of TCP parameters that may be adjusted/modified by aspects of this disclosure. As an example, embodiments of this disclosure may include modifications to TCP and/or other protocols that increase the number of operational phases. Many TCP protocols initialize with a slow start phase, which may include transmitting packets at a low rate (e.g., one-packet/RTT) and thereafter incrementing the rate (exponentially or otherwise) until a congestion event occurs (or until the transmission is completed). The congestion event may include the failure to receive an acknowledge (ACK) message for a transmitted packet (e.g., after a timeout), the reception of a negative acknowledgment (NACK) message, or any other event suggesting that a packet transmission was unsuccessful. The TCP transmission sequence 200 may respond to the congestion event by decrementing the transmission rate to a bottom or floor (e.g., one-packet/RTT) in an attempt to alleviate the perceived congestion. After reaching the bottom or floor, the TCP transmissions sequence 200 may proceed in accordance with a FAST recovery phase, which may include increasing the packet transmission rate (e.g., exponentially or otherwise) for a period of time or until the packet transmission rate reaches a threshold. After the FAST recovery period, the TCP transmissions sequence 200 may proceed in accordance with a congestion avoidance phase, which may include increasing the packet transmission rate at a slower fixed rate for some time period.

Conventionally, TCP parameters are statically defined by a TCP algorithm configured on the server. Indeed, as much as sixty percent of server processing capacity may be consumed by managing (e.g., constructing, destructing, etc.) TCP connections. Aspects of this disclosure offload at least some of the responsibility for managing TCP connections to a middlebox, which may be configured to dynamically configure TCP connection parameters based on various real-time characteristics.

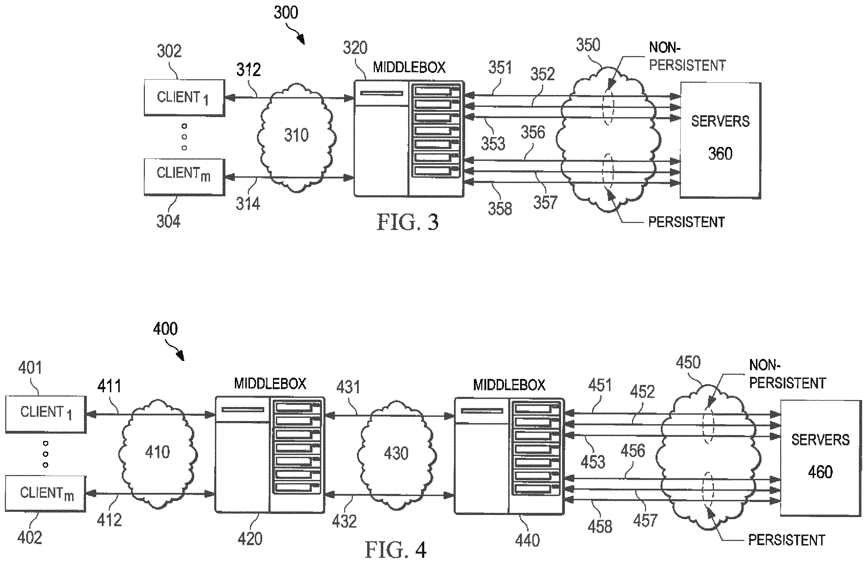

In some embodiments, a single middlebox may be implemented on the server side of the network. FIG. 3 illustrates an embodiment TCP network architecture 300 over which a middlebox 320 manages TCP connections for carrying data between a plurality of clients 302-304 and one or more servers 360. As shown, the clients 302-304 communicate with the middlebox 320 via TCP connections 312-314 spanning a first network 310, while the middlebox 320 communicates with the server 360 via TCP connections 351-358 spanning a second network 350. In some embodiments, the first network 310 has different characteristics than the second network 350. For instance, the first network 310 may be a high latency network, such as a wide area network (WAN), while the second network 350 may be a low latency network, such as a local area network (LAN). Additionally or alternatively, the first network 310 may be less reliable than the second network 350, as might be the case if the first network 310 is a wireless network and the second network 350 is a wire-line network. The TCP connections 351-358 may include a group of non-persistent TCP connections 351-353 as well as a group of persistent TCP connections 356-358. The non-persistent TCP connections 351-353 may be constructed by the middlebox 320 in accordance with dynamic TCP parameters, while the persistent TCP connections 356-358 may be re-configured with new/updated TCP parameters.

In other embodiments, middleboxes may be implemented on the client side as well as the server side. FIG. 4 illustrates an embodiment TCP network architecture 400 over which a pair of middleboxes 420-440 manages TCP connections for carrying data between a plurality of clients 401-402 and one or more servers 460. As shown, the clients 401-402 communicate with the middlebox 420 via TCP connections 411-412 spanning a first network 410, the middlebox 420 communicates with the middlebox 440 via TCP connections 431-432 spanning a second network 430, and the middlebox 440 communicates with the server 460 via TCP connections 451-458 spanning a third network 450. Additionally, the TCP connections 431-432 may be persistent or non-persistent connections managed by the middleboxes 420-440. Similar to the network 310, 350 discussed above, the networks 410, 430, 450 may have different characteristics.

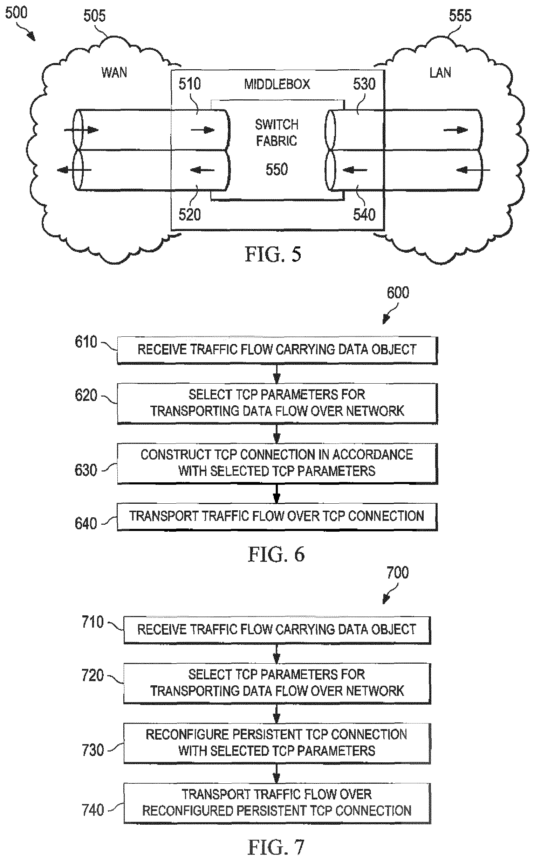

FIG. 5 illustrates an embodiment middlebox 500, as might be implemented in one of the TCP network architectures 300-400. As shown, the middlebox 500 may include an ingress WAN interface 510 and an egress WAN interface 520 for communicating data over a WAN 505, as well as an egress LAN interface 530 and an ingress LAN interface 540 for communicating data over a LAN 555. The middlebox 500 may also include a switching fabric 550 for switching data between the interfaces 510-540.

Aspects of this disclosure dynamically configure TCP parameters in accordance with traffic and/or network characteristics. In some embodiments, TCP parameters may be dynamically configured when constructing a new/non-persistent TCP connection. FIG. 6 illustrates a method 600 for communicating data while dynamically configuring TCP connection parameters, as may be performed by a switching device (e.g., a middlebox, server, router, etc.). The method 600 begins at step 610, where the switching device receives a traffic flow. The traffic flow many be any type of traffic, e.g., content request, content reply, etc. In some embodiments, different traffic flows are optimized differently. For example, a traffic flow carrying a request for a data object may be optimized differently than a traffic flow carrying the requested data object. Data object requests tend to be much shorter than data object responses, and the size of the request and response may be used as a basis for adjusting TCP parameter settings so that object requests and responses can have different optimal TCP settings. Thereafter, the method 600 proceeds to step 620, where the switching device selects TCP parameters for transporting the data flow over the network. The TCP parameters may be selected based on a characteristic of the traffic (e.g., data object request, response carrying the data object, etc.), a condition of the network, or some other criteria.

TCP parameters are selected in accordance with a characteristic of the traffic and/or data object. The characteristic of the data object may include a size of the data object, a traffic type (e.g., isochronous traffic such as voice/video vs. common files) associated with the data object, a special handling instruction for the object, or some other characteristic. For instance a special handling instruction for the object may result from the detection of embedded indicator bits or a recognizable pattern that triggers policy decisions (e.g., decisions determining priority, Quality of Service (QoS), fairness, etc.).

TCP parameters are selected based on a historical characteristic associated with the traffic and/or data object. For instance, the historical characteristic may include a frequency in which the data object is communicated, a source of the data object, a historical variation in size of the data object. As an example, traffic patterns from past flows or a recurring group of flows (e.g., as recorded in a history table) may influence TCP parameter selection. For instance, historical traffic patterns may indicate the presence of wireless environments associated with particular IP address ranges or particular traffic types. Wireless network environments may bring about the following traffic patterns: (i) wide variations in RTTs; (ii) long RTTs; (iii) sudden drastic increase in RTTs (e.g., delay spike) (iv) out-of-order packets; (v) low throughput (e.g., less than 20 Mbps); and (vi) high retransmission rates; (vii) long disruptions (e.g., in the order of seconds); (viii) unpredictable error rates; (ix) clustered Losses (e.g., multiple packets lost during a short period window); and (x) losses correlated with frame sizes (e.g., longer frames mean more air time and increased likelihood of transmission environment corruption and packet loss). History tables may record various information about traffic flows, and may be sorted by origin address, traffic type, size of packets, congestion detected numbers, reordering counts, etc.

In some embodiments, TCP parameters are selected in accordance with a characteristic of a network, such as congestion frequency, network throughput, network latency, variations in latency and/or throughput, error statistics, etc. In one example, TCP parameters are selected based on network traffic environments between communicating TCP legs. For instance, short flows maybe communicated more quickly by increasing the initial window size parameter and/or manipulating other TCP parameters. In an embodiment, each piece of a split connection may be individually optimized such that delay and throughput limitations of short flows are minimized or substantially eliminated for flows traversing split TCP connections. In an embodiment, managing data flows communicated between different speed and/or capacity RTT environments may allow for more efficient use of resources. In an embodiment, managing data flows between different RTT environments may allow a more efficient use of connection flows to persistent LAN or WAN connections. In an embodiment, managing data flows between different RTT environments may allow split TCP connections that carry the same traffic to communicate between TCP legs to share buffer storage or history knowledge.

After the TCP parameters are selected, the method 600 proceeds to step 630, where the switching device constructs a TCP connection in accordance with the selected TCP parameters. Subsequently, the method 600 proceeds to step 640, where the switching device transports the traffic flow over the TCP connection.

In other embodiments, TCP parameters may be dynamically configured by re-configuring TCP parameters of an existing/persistent TCP connection. FIG. 7 illustrates a method 700 for communicating data over a dynamically configured TCP connection, as may be performed by a switching device (e.g., a middlebox, server, router, etc.). The method 700 begins at step 710, where the switching device receives a traffic flow. The traffic flow may be any type of traffic flow, such as a request for a data object or a stream of response packets carrying the requested data object. Different types of traffic flows may be optimized differently. Thereafter, the method 700 proceeds to step 720, where the switching device selects TCP parameters for transporting the data flow over the network. Next, the method 700 proceeds to step 730, where the switching device re-configures an existing/persistent TCP connection in accordance with the selected TCP parameters. Subsequently, the method 700 proceeds to step 740, where the switching device transports the traffic flow over the reconfigured persistent TCP connection.

In some implementations, it may be desirable for a pool of users to share re-configurable/persistent TCP connections in a time-shared manner. FIG. 8 illustrates an embodiment TCP network architecture 800 over which a plurality of time-shared TCP connections 851-854 are shared by a plurality of clients 802-804. As shown, the time-shared TCP connections 851-854 are persistent TCP connections extending between a middlebox 820 and a server 860, and are used for communicating data over the network 850. In some embodiments, the time-shared TCP connections 851-854 are re-configurable. For instance, the middlebox 820 may reconfigure TCP parameters of the time-shared TCP connections 851-854 by binding selected TCP parameters to a traffic flow.

FIG. 9 illustrates a method 900 for communicating data over reconfigurable time-shared TCP connections, as may be performed by a switching device. The method 900 begins at step 910, where the switching device receives a traffic flow. The traffic flow may be any type of traffic flow (e.g., request, response, etc.), and different types of traffic flows may be optimized differently. Thereafter, the method 900 proceeds to step 920, where the switching device selects TCP parameters for transporting the traffic flow over the network. Next, the method 900 proceeds to step 930, where the switching device binds the selected TCP parameters to the traffic flow. Thereafter, the method 900 proceeds to step 940, where the switching device forwards the traffic over a time-shared TCP connection after re-configuring the time-shared TCP connection.

In some applications, it may be desirable to delay selection of the TCP parameters for a period of time. For instance, immediately transporting a traffic flow over an existing default TCP connection may decrease latency. FIG. 10 illustrates an embodiment TCP network architecture 1000 over which a middlebox 1020 forwards data received from the clients 1002-1004 over one or more TCP connections 1051-1054 to a server 1060. As shown, the TCP connection 1051 is a default TCP connection, while the TCP connections 1052-1054 are configurable connections. The TCP connections 1052-1054 may be re-configurable persistent connections, or configurable non-persistent connections. The middlebox 1020 may be configured to initially forward received data flows over the TCP connection 1051 until a triggering event occurs. The triggering event may be a congestion event (e.g., failure to receive a ACK message) or some other event. For instance, the triggering event may occur upon recognizing that the traffic flow has a certain characteristic, e.g., exceeds a certain size, has a certain QoS requirement, has a certain traffic type, has certain IP addresses, etc. Upon detecting the triggering event, the middlebox may configure/re-configure one or more of the TCP connections 1052-1054, and thereafter transport the remainder of the traffic flow over the configured/re-configured TCP connection.

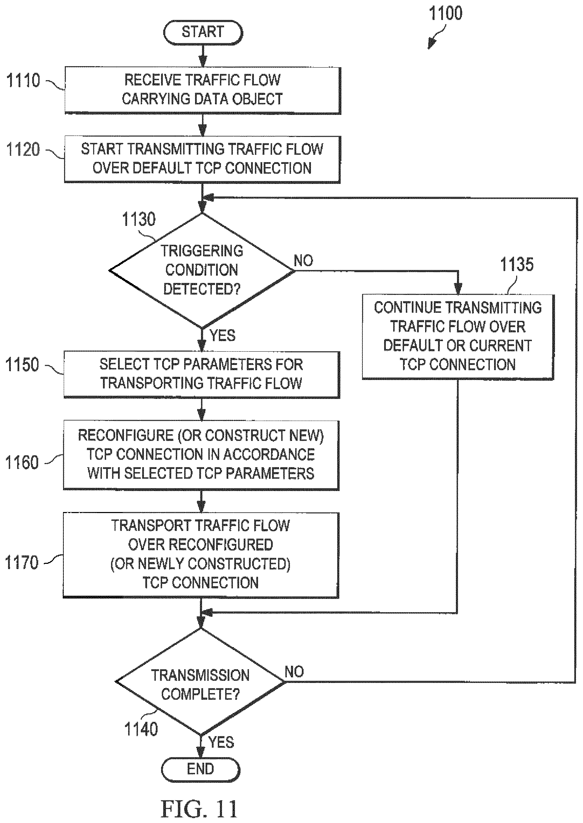

FIG. 11 illustrates a method 1100 for communicating data while delaying the binding of dynamically configured TCP connection parameters to the traffic flow, as may be performed by a switching device (e.g., a middlebox, server, router, etc.). The method 1100 begins at step 1110, where the switching device receives a traffic flow of any kind. For example, a request for a data object or a stream of response packets carrying the requested data object can be optimized differently. Data object requests tend to be much shorter than object responses and the size of the request and response can also be used to adjust TCP parameter settings so that object requests and responses can have different optimal TCP settings. Thereafter, the method 1100 proceeds to step 1120, where the switching device immediately begins transmitting the traffic flow over the default TCP connection. The default TCP connection may be a persistent TCP connection, and the TCP parameters may only be defined up until the point of congestion detection or some other triggering event such as byte or packet counts, etc. For instance, the default TCP parameters may consist of an initial window size and an amount in which the transmission rate is incremented (e.g., exponentially, etc.). Next, the method 1100 proceeds to step 1130, where the switching device determines whether a triggering condition has been detected. If not, the method 1100 proceeds to step 1135, where the switching device continues to transmit the traffic flow over the default TCP connection. After step 1135, the method 1100 proceeds to step 1140, where the switching device determines whether the transmission has been completed. If so, the method 1100 ends. Otherwise, the method 1100 reverts back to step 1130.

If the switching device determines that the triggering condition has occurred during the step 1130, the method 1100 proceeds to step 1150, where the triggering device selects TCP parameters for transporting the traffic flow. Next, the method 1100 proceeds to step 1160, where the switching device reconfigures an existing/persistent TCP connection, or alternatively, configures a new/non-persistent TCP connection, with the selected TCP parameters. Subsequently, the method 1100 proceeds to step 1170, where the switching device begins to transport the remainder of the traffic flow over the re-configured/newly-configured TCP connection. Subsequently, the method 1100 proceeds to step 1140, where the switching device determines whether or not transmission of the traffic flow is complete. If so, the method 1100 ends. Otherwise, the method 1100 reverts back to step 1130.

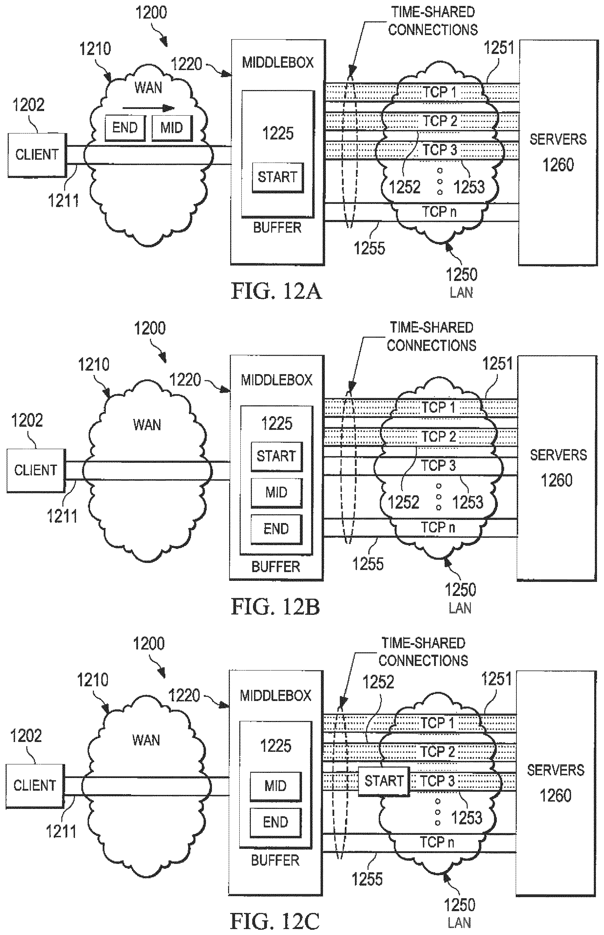

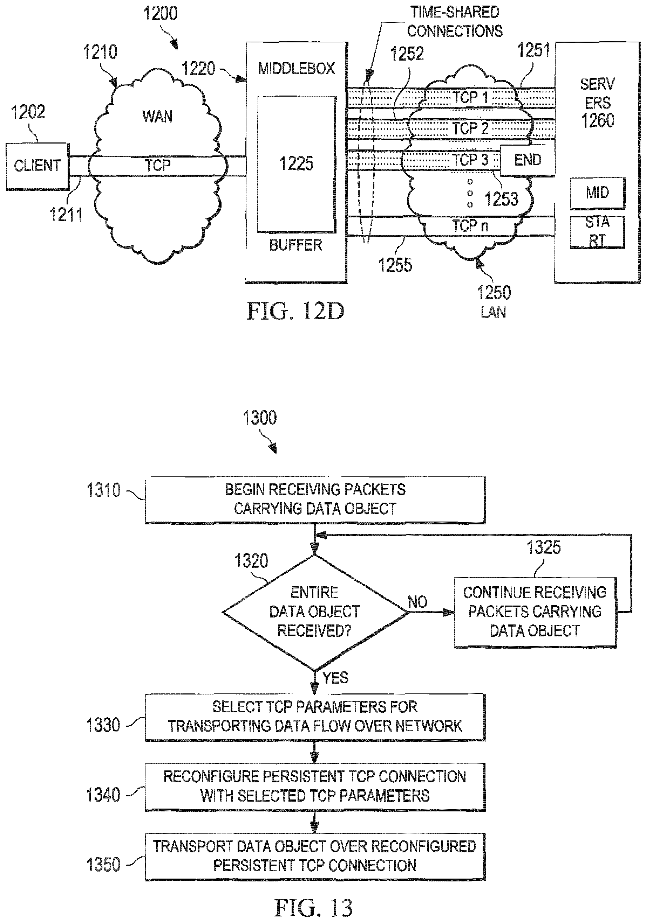

FIGS. 12A-12D depict a network 1200 comprising a client 1202 communicating a sequence of packets to a server 1260 via a middlebox 1220. As shown, the client 1202 communicates with the middlebox 1220 via the WAN 1210, while the middlebox 1220 communicates with server 1260 via the LAN 1250. Hence, the sequence of packets are transported over the WAN 1210 and the LAN 1250 when communicated from the client 1202 to the server 1260.

Traditionally, a node (such as the middlebox) would immediately begin forwarding packets in the server 1260 upon beginning to receive the sequence of packets over the TCP connection 1211. This traditional approach may unduly tie up bandwidth resources in the LAN 1250, as RTTs for the WAN 1210 may be much longer than RTTs for the LAN 1250. To wit, the middle box 1220 may be capable of transmitting the packets over any of the TCP connections 1251-1255 at a much faster rate than that in which the packets are received over the TCP connection 1211. For example, if the middlebox 1220 transmitted the "START" packet over the TCP connection 1255 immediately upon beginning to receive the sequence of packets, then the TCP connection 1255 may be reserved while remaining packets in the sequence of packets (e.g., "MID" and "END") are received over the TCP connection 1211.

Aspects of this disclosure avoid unnecessarily tying up resources in the LAN 1250 by deferring transportation of the "START" packet over the LAN 1250 until the entire sequence of packets has been received over the TCP connection 1211. The packets are then sent to the server 1260 in a single burst. Accumulating the WAN packets before sending them in a burst over the LAN has the added advantage to make sure that an entire request arrives and the user (individual or program entity) really wants the object, for example, a user didn't click off the object request (change the web page causing a connection reset or end) before asking the server to do processing to retrieve the object from its data store. More specifically, and as shown in FIG. 12A, the middle box 1220 places the sequence of packets into the buffer 1225 packet-by-packet as they are received. Once the entire sequence of packets is received (as shown in FIG. 12B), the middlebox 1220 selects one of the TCP connections 1251-1255 for transporting the sequence of packets over the LAN 1250. In this example, the middlebox 1220 selects the TCP connection 1253 for transporting the sequence of packets over the LAN 1250. Thereafter, the middlebox 1220 transports the sequence of packets over the selected TCP connection 1253, as shown in FIGS. 12C-12D.

In addition to conserving bandwidth in the LAN 1250, delaying transportation of packets over the LAN 1250 until the entire sequence has been received over the WAN 1210 may allow the middle box 1220 to more effectively select TCP parameters for transporting the sequence of packets over the LAN 1250. For instance, the middle box 1220 may select one of the TCP connections 1253 based on a characteristic that is not known until the entire sequence of packets has been received, such as the size of the traffic, any traffic carried indicator flags or special bit sequences, etc. Additionally, the pool of available TCP connections 1251-1255 may change. In this example, the TCP connection 1253 was unavailable when the "START" packet was initially received (as shown in FIG. 12B), but later became available (as shown in FIG. 12C).

In some embodiments, the time-shared TCP connections maybe re-configured with selected TCP parameters. FIG. 13 illustrates a method 1300 for communicating a sequence of packets over a network. The method 1300 begins at step 1310, where the switching device begins receiving a sequence of packets. The sequence of packets may include any type of packets, such as packets carrying a request for a data object or a stream of response packets carrying the requested data object. Different types of packets may be optimized differently. For instance, sequences of packets carrying data object requests tend to be much shorter than sequences of packets carrying object responses, and the length of the sequence of packet (or the amount of data carried thereby) may be a basis upon which TCP parameter settings are adjusted. Accordingly, sequences of packets carrying object requests can have different TCP settings than sequences of packets carrying object responses. The sequence of packets may be received over a TCP interface spanning a first network (e.g., a WAN network, etc.). Thereafter, the method 1300 proceeds to step 1320, where the switching device determines whether the entire sequence of packets either a request or response data object has been received. If not, the method 1300 proceeds to step 1325, where the switching device continues to receive packets until the entire data object is received. Once the entire data object has been received, the method 1300 proceeds to step 1330, where the switching device selects TCP parameters for transporting the data flow over the network. Next, the method 1300 proceeds to step 1340, where the switching device reconfigures persistent TCP connections with selected TCP parameters. Thereafter, method 1300 proceeds to step 1350, where the switching device transports the sequence of packets carrying the data object over the reconfigured TCP connection.

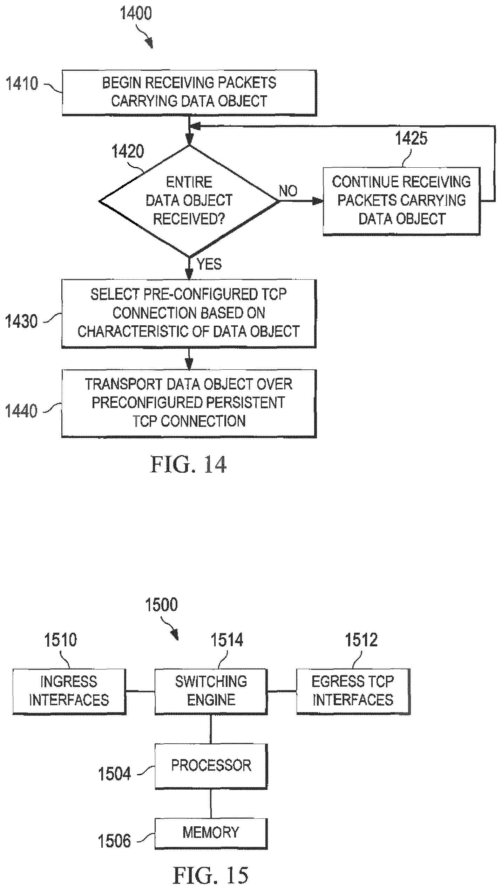

In other embodiments, the time-shared TCP connections may be preconfigured with different TCP parameters, and the switching device may select one of the pre-configured TCP connections based on the characteristics of the data object and/or the characteristics of the network. FIG. 14 illustrates a method 1400 for communicating a sequence of packets over pre-configured TCP connections. The method 1400 begins at step 1410, where the switching device begins receiving a sequence of packets. The sequence of packets may include any type of packets. The sequence of packets may be received over a TCP interface spanning a first network (e.g., a WAN network, etc.). Thereafter, the method 1400 proceeds to step 1420, where the switching device determines whether the entire data object has been received. If not, the method 1400 proceeds to step 1425, where the switching device continues to receive packets until the entire data object is received. Once the entire data object has been received, the method 1400 proceeds to step 1430, where the switching device selects a pre-configured TCP connection based on characteristics of the data object. Next, the method 1400 proceeds to step 1440, where the switching device transports the sequence of packets carrying the data object over the selected TCP connection.

In aspects of this disclosure, multiple TCP connections may be managed collectively. For instance, a group of TCP connections may share a common set of TCP parameters such that the entire group of TCP connections can be managed collectively. Additionally, TCP parameters may be re-used when creating and/or reconfiguring TCP connections, thereby reducing delays in establishing/re-configuring TCP connections as well as conserving processing resources. The following are just a few examples of situations in which it may be beneficial to group TCP connections: (i) when connections are experiencing similar connection activity from shared origins; (ii) when connections have a shared ISP environment; (iii) when connections have a shared network element usage; (iv) when connections have a statically configured shared element usage; (v) when connections share a common IP address range; (vi) when connections have a shared service provider (e.g., a wireless provider, China Mobile, with well-known addresses); and (vii) when connections are experiencing activity from shared origins and/or destinations.

FIG. 15 illustrates a block diagram of an embodiment of a communications device 1500, which may be equivalent to one or more devices (e.g., middlebox, etc.) discussed above. The communications device 1500 may include a processor 1504, a memory 1506, ingress TCP interfaces 1510, egress TCP interfaces 1512, and a switching engine 1514, a supplemental wireless interface 1512, and a supplemental interface 1510, which may (or may not) be arranged as shown in FIG. 15. The processor 1504 may be any component capable of performing computations and/or other processing related tasks, and the memory 1506 may be any component capable of storing programming and/or instructions for the processor 1504. The ingress TCP interfaces 1510 may be any component or collection of components that allows the communications device 1500 to receive TCP packets, while the egress TCP interfaces 1512 may be any component or collection of components that allows the communications device 1500 to transmit TCP packets. The switching engine 1514 may be any component or collection of components that allows the communications device 1500 to switch TCP packets between the ingress TCP interfaces 1510 and the egress TCP interfaces 1512.

Although the description has been described in detail, it should be understood that various changes, substitutions and alterations can be made without departing from the scope of this disclosure as defined by the appended claims. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

## Claims

1. A method (600, 700, 900, 1100) for communicating data, the method comprising:
receiving (610, 710, 910, 1110) a traffic flow;
selecting (620, 720, 920, 1150) transport control protocol, TCP, parameters for transporting the traffic flow in accordance with a characteristic of the traffic flow; and
transporting (640, 740, 940, 1170) the traffic flow over a TCP connection (351-353, 356-358, 451-458, 1052-1054) configured in accordance with the selected TCP parameters,
**characterized in that** the method further comprises selecting the characteristic of the traffic flow by:
identifying, in a history table, an entry associated with a data object carried by or requested by the traffic flow, wherein the history table records traffic patterns from past flows or a recurring group of flows, and which records information about traffic flows including at least one of an origin address, a traffic type, a size of packets and congestion detected numbers; and
determining the characteristic of the traffic flow based on a historical statistic listed in the entry in the history table.

2. The method (600, 700, 900, 1100) of claim 1, wherein transporting the traffic flow over the TCP connection (351-353, 451-458, 1052-1054) configured in accordance with the selected TCP parameters comprises:
constructing the TCP connection in accordance with the selected TCP parameters; and
sending the traffic flow over the TCP connection.

3. The method (600, 700, 900, 1100) of claim 1, wherein transporting the traffic flow over the TCP connection (351-353, 356-358, 451-458,1052-1054) configured in accordance with the selected TCP parameters comprises:
re-configuring an existing TCP connection in accordance with the selected TCP parameters; and
sending the traffic flow over the re-configured TCP connection.

4. The method (600, 700, 900, 1100) of claim 3, wherein the existing TCP connection (356-358, 451-458, 1052-1054) is a persistent connection.

5. The method (600, 700, 900, 1100) of claim 4, wherein the existing TCP connection is an egress TCP connection extending from a middlebox to a server, and wherein the egress TCP connection is shared amongst a plurality of ingress connections terminating at the middlebox.

6. The method (600, 700, 900, 1100) of claim 5, wherein the plurality of ingress connections are TCP connections extending from one or more clients to the middlebox.

7. The method (600, 700, 900, 1100) of claim 1, wherein the characteristic of the traffic flow includes at least one of a size of the traffic flow, a traffic type associated with the traffic flow, or handling instructions for the traffic flow.

8. The method (600, 700, 900, 1100) of claim 1, wherein the characteristic of the traffic flow is at least one of a frequency in which the data object is communicated, a source of the data object, a historical variation in size of the data object, or a historical traffic pattern.

9. The method (600, 700, 900, 1100) of claim 1, wherein the characteristic of the network comprises at least one of a congestion level, a frequency, a network throughput, a network latency, a variation in network latency, and a variation in network throughput.

10. An apparatus (320, 420, 440, 820, 1020) for communicating data, the apparatus comprising:
a processor; and
a computer readable storage medium storing programming for execution by the processor, the programming including instructions to:
receive (610, 710, 910, 1110) a traffic flow;
select (620, 720, 920, 1150) transport control protocol, TCP, parameters for
transporting (640, 740, 940, 1170) the traffic flow in accordance with a characteristic of the traffic flow; and transport the traffic flow over a TCP connection configured in accordance with the selected TCP parameters,
**characterized in that** the instructions to select TCP parameters for transporting the traffic flow include instructions to select TCP parameters in accordance with a characteristic of the traffic flow and the programming includes instructions to select the characteristic of the traffic flow by:
identifying, in a history table, an entry associated with a data object carried by or requested by the traffic flow, wherein the history table records traffic patterns from past flows or a recurring group of flows, and which records information about traffic flows including at least one of an origin address, a traffic type, a size of packets and congestion detected numbers; and
determining the characteristic of the traffic flow based on a historical statistic listed in the entry in the history table.

11. The apparatus (320, 420, 440, 820, 1020) of claim 10, wherein the instructions to select TCP parameters for transporting the traffic flow include instructions to:
select TCP parameters in accordance with a characteristic of the network including at least one of a congestion level, a frequency, a network throughput, a network latency, a variation in network latency, and a variation in network throughput.

## Patentansprüche

1. Verfahren (600, 700, 900, 1100) zum Kommunizieren von Daten, wobei das Verfahren Folgendes umfasst:
Empfangen (610, 710, 910, 1110) eines Verkehrsflusses;
Auswählen (620, 720, 920, 1150) von Transport-Control-Protocol-Parametern (TCP-Parametern) zum Transportieren des Verkehrsflusses gemäß einer Eigenschaft des Verkehrsflusses; und
Transportieren (640, 740, 940, 1170) des Verkehrsflusses über eine TCP-Verbindung (351-353, 356-358, 451-458, 1052-1054), die gemäß den ausgewählten TCP-Parametern konfiguriert ist,
**dadurch gekennzeichnet, dass** das Verfahren ferner ein Auswählen der Eigenschaft des Verkehrsflusses durch Folgendes umfasst:
Identifizieren einer Eingabe in Verbindung mit einem Datenobjekt, getragen durch oder angefragt durch den Verkehrsfluss, in einer Verlaufstabelle, wobei die Verlaufstabelle Verkehrsmuster aus vergangenen Flüssen oder einer wiederkehrenden Flussgruppe aufzeichnet und wobei sie Informationen zu Verkehrsflüssen einschließlich mindestens eines von einer Herkunftsadresse, einer Verkehrsart, einer Paketgröße und Anzahlen erfasster Datenstaus aufzeichnet; und
Bestimmen der Eigenschaft des Verkehrsflusses auf Grundlage einer historischen Statistik, die in der Eingabe der Verlaufstabelle aufgelistet ist.

2. Verfahren (600, 700, 900, 1100) nach Anspruch 1, wobei das Transportieren des Verkehrsflusses über die TCP-Verbindung (351-353, 451-458, 1052-1054), die gemäß den ausgewählten TCP-Parametern konfiguriert ist, Folgendes umfasst:
Konstruieren der TCP-Verbindung gemäß den ausgewählten TCP-Parametern; und
Senden des Verkehrsflusses über die TCP-Verbindung.

3. Verfahren (600, 700, 900, 1100) nach Anspruch 1, wobei das Transportieren des Verkehrsflusses über die TCP-Verbindung (351-353, 356-358, 451-458, 1052-1054), die gemäß den ausgewählten TCP-Parametern konfiguriert ist, Folgendes umfasst:
Rekonfigurieren einer bestehenden TCP-Verbindung gemäß den ausgewählten TCP-Parametern; und
Senden des Verkehrsflusses über die rekonfigurierte TCP-Verbindung.

4. Verfahren (600, 700, 900, 1100) nach Anspruch 3, wobei die bestehende TCP-Verbindung (356-358, 451-458, 1052-1054) eine dauerhafte Verbindung ist.

5. Verfahren (600, 700, 900, 1100) nach Anspruch 4, wobei die bestehende TCP-Verbindung eine ausgangsseitige TCP-Verbindung ist, die sich von einer Middlebox zu einem Server erstreckt, und wobei die ausgangsseitige TCP-Verbindung durch eine Vielzahl von eingangsseitigen Verbindungen, die an der Middlebox enden, gemeinsam verwendet wird.

6. Verfahren (600, 700, 900, 1100) nach Anspruch 5, wobei die Vielzahl von eingangsseitigen Verbindungen TCP-Verbindungen sind, die sich von einem oder mehreren Clients zur Middlebox erstrecken.

7. Verfahren (600, 700, 900, 1100) nach Anspruch 1, wobei die Eigenschaft des Verkehrsflusses mindestens eines von einer Größe des Verkehrsflusses, einer Verkehrsart in Verbindung mit dem Verkehrsfluss oder den Handhabungsanweisungen für den Verkehrsfluss beinhaltet.

8. Verfahren (600, 700, 900, 1100) nach Anspruch 1, wobei die Eigenschaft des Verkehrsflusses mindestens eines von einer Frequenz, in der das Datenobjekt kommuniziert wird, einer Quelle des Datenobjekts, einer historischen Größenabweichung des Datenobjekts oder eines historischen Verkehrsmusters ist.

9. Verfahren (600, 700, 900, 1100) nach Anspruch 1, wobei die Eigenschaft des Netzwerks mindestens eines von einem Staupegel, einer Frequenz, eines Netzwerkdurchsatzes, einer Netzwerklatenz, einer Abweichung bei der Netzwerklatenz und einer Abweichung beim Netzwerkdurchsatz umfasst.

10. Vorrichtung (320, 420, 440, 820, 1020) zum Kommunizieren von Daten, wobei die Vorrichtung Folgendes umfasst:
einen Prozessor; und
ein computerlesbares Speichermedium, das die Programmierung zur Ausführung durch den Prozessor speichert, wobei die Programmierung Anweisungen für Folgendes beinhaltet:
Empfangen (610, 710, 910, 1110) eines Verkehrsflusses;
Auswählen (620, 720, 920, 1150) von Transport-Control-Protocol-Parametern (TCP-Parametern) zum Transportieren (640, 740, 940, 1170) des Verkehrsflusses gemäß einer Eigenschaft des Verkehrsflusses; und
Transportieren des Verkehrsflusses über eine TCP-Verbindung, die gemäß den ausgewählten TCP-Parametern konfiguriert ist,
**dadurch gekennzeichnet, dass** die Anweisungen zum Auswählen von TCP-Parametern zum Transportieren des Verkehrsflusses Anweisungen zum Auswählen von TCP-Parametern gemäß einer Eigenschaft des Verkehrsflusses beinhalten und dass die Programmierung Anweisungen zum Auswählen der Eigenschaft des Verkehrsflusses durch Folgendes beinhaltet:
Identifizieren einer Eingabe in Verbindung mit einem Datenobjekt, getragen durch oder angefragt durch den Verkehrsfluss, in einer Verlaufstabelle, wobei die Verlaufstabelle Verkehrsmuster aus vergangenen Flüssen oder einer wiederkehrenden Flussgruppe aufzeichnet und wobei sie Informationen zu Verkehrsflüssen einschließlich mindestens eines von einer Herkunftsadresse, einer Verkehrsart, einer Paketgröße und Anzahlen erfasster Datenstaus aufzeichnet; und
Bestimmen der Eigenschaft des Verkehrsflusses auf Grundlage einer historischen Statistik, die in der Eingabe der Verlaufstabelle aufgelistet ist.

11. Vorrichtung (320, 420, 440, 820, 1020) nach Anspruch 10, wobei die Anweisungen zum Auswählen der TCP-Parameter zum Transportieren des Verkehrsflusses Anweisungen für das Folgende beinhalten:
Auswählen der TCP-Parameter gemäß einer Eigenschaft des Netzwerks, die mindestens eines von einem Staupegel, eine Frequenz, eines Netzwerkdurchsatzes, einer Netzwerklatenz, einer Abweichung bei der Netzwerklatenz und einer Abweichung beim Netzwerkdurchsatz beinhaltet.

## Revendications

1. Procédé (600, 700, 900, 1100) de communication de données, le procédé comprenant :
la réception (610, 710, 910, 1110) d'un flux de trafic ;
la sélection (620, 720, 920, 1150) de paramètres du protocole de commande de transport (TCP) pour transporter le flux de trafic en fonction d'une caractéristique du flux de trafic ; et
le transport (640, 740, 940, 1170) du flux de trafic sur une connexion TCP (351-353, 356-358, 451-458, 1052-1054) configurée en fonction des paramètres TCP sélectionnés,
**caractérisé en ce que** le procédé comprend en outre la sélection des caractéristiques du flux de trafic par :
l'identification, dans une table d'historique, d'une entrée associée à un objet de données transporté par ou demandé par le flux de trafic, dans lequel la table d'historique enregistre des modèles de trafic à partir de flux passés ou d'un groupe récurrent de flux, et qui enregistre des informations concernant des flux de trafic incluant au moins l'un parmi une adresse d'origine, un type de trafic, une taille de paquets et des nombres détectés d'encombrements ; et
la détermination de la caractéristique du flux de trafic sur la base d'une statistique historique recensée dans l'entrée de la table d'historique.

2. Procédé (600, 700, 900, 1100) selon la revendication 1, dans lequel le transport du flux de trafic sur la connexion TCP (351-353, 451-458, 1052-1054) configurée en fonction des paramètres TCP sélectionnés comprend :
la construction de la connexion TCP en fonction des paramètres TCP sélectionnés ; et
l'envoi du flux de trafic sur la connexion TCP.

3. Procédé (600, 700, 900, 1100) selon la revendication 1, dans lequel le transport du flux de trafic sur la connexion TCP (351-353, 356-358, 451-458, 1052-1054) configurée en fonction des paramètres TCP sélectionnés comprend :
la reconfiguration d'une connexion TCP existante en fonction des paramètres TCP sélectionnés ; et
l'envoi du flux de trafic sur la connexion TCP reconfigurée.

4. Procédé (600, 700, 900, 1100) selon la revendication 3, dans lequel la connexion TCP existante (356-358, 451-458, 1052-1054) est une connexion persistante.

5. Procédé (600, 700, 900, 1100) selon la revendication 4, dans lequel la connexion TCP existante est une connexion TCP de sortie s'étendant depuis un boîtier intermédiaire jusqu'à un réseau, et dans lequel la connexion TCP de sortie est partagée entre une pluralité de connexions d'entrée se terminant au boîtier intermédiaire.

6. Procédé (600, 700, 900, 1100) selon la revendication 5, dans lequel la pluralité de connexions d'entrée sont des connexions TCP s'étendant depuis un ou plusieurs clients jusqu'au boîtier intermédiaire.

7. Procédé (600, 700, 900, 1100) selon la revendication 1, dans lequel la caractéristique du flux de trafic inclut au moins l'un parmi une taille du flux de trafic, un type de trafic associé au flux de trafic, ou des instructions de gestion du flux de trafic.

8. Procédé (600, 700, 900, 1100) selon la revendication 1, dans lequel la caractéristique du flux de trafic est au moins l'un parmi une fréquence dans laquelle l'objet de données est communiqué, une source de l'objet de données, une variation historique de taille de l'objet de données, ou un modèle de trafic historique.

9. Procédé (600, 700, 900, 1100) selon la revendication 1, dans lequel la caractéristique du réseau comprend au moins l'un parmi un niveau d'encombrement, une fréquence, un débit du réseau, une latence du réseau, une variation de latence du réseau et une variation de débit du réseau.

10. Appareil (320, 420, 440, 820, 1020) de communication de données, l'appareil comprenant :
un processeur ; et
un support de stockage lisible par ordinateur et stockant une programmation destinée à être exécutée par le processeur, la programmation incluant des instructions pour :
recevoir (610, 710, 910, 1110) un flux de trafic ;
sélectionner (620, 720, 920, 1150) des paramètres du protocole de commande de transport (TCP) pour transporter (640, 740, 940, 1170) le flux de trafic en fonction d'une caractéristique du flux de trafic ; et
transporter le flux de trafic sur une connexion TCP configurée en fonction des paramètres TCP sélectionnés,
**caractérisé en ce que** les instructions pour sélectionner des paramètres TCP pour transporter le flux de trafic incluent des instructions pour sélectionner des paramètres TCP en fonction d'une caractéristique du flux de trafic et la programmation inclut des instructions pour sélectionner la caractéristique du flux de trafic :
en identifiant, dans une table d'historique, une entrée associée à un objet de données transporté par ou demandé par le flux de trafic, dans lequel la table d'historique enregistre des modèles de trafic à partir de flux passés ou d'un groupe récurrent de flux, et qui enregistre des informations concernant des flux de trafic incluant au moins l'un parmi une adresse d'origine, un type de trafic, une taille de paquets et des nombres détectés d'encombrements ; et
en déterminant la caractéristique du flux de trafic sur la base d'une statistique historique recensée dans l'entrée de la table d'historique.

11. Appareil (320, 420, 440, 820, 1020) selon la revendication 10, dans lequel les instructions pour sélectionner des paramètres TCP pour transporter le flux de trafic incluent des instructions pour :
sélectionner des paramètres TCP en fonction d'une caractéristique du réseau incluant au moins l'un parmi un niveau d'encombrement, une fréquence, un débit du réseau, une latence du réseau, une variation de latence du réseau et une variation de débit du réseau.
